# EUROPÄISCHE PATENTSCHRIFT

(11) **EP 2 616 893 B1**
(45) Veröffentlichungstag und Bekanntmachung des Hinweises auf die Patenterteilung: **04.01.2017**
(21) Anmeldenummer: 11764676.0
(22) Anmeldetag: 14.09.2011
(51) Int. Cl.: G05G 9/047, G06F 1/16, G06F 3/048, F41A 19/08, F42C 15/42

(54) **MENSCH-MASCHINE-INTERFACE FÜR EIN SOLDATENFÜHRUNGSSYSTEM**
MAN-MACHINE INTERFACE FOR A MILITARY MANAGEMENT SYSTEM
INTERFACE HOMME-MACHINE POUR UN SYSTÈME DE GUIDAGE DE SOLDATS

(30) Priorität: 14.09.2010 DE 102010045257
(43) Veröffentlichungstag der Anmeldung: 24.07.2013
(73) Patentinhaber: Rheinmetall Defence Electronics GmbH, 28309 Bremen (DE)
(72) Erfinder: HEZEL, Marco, 28215 Bremen (DE); HINSCH, Thomas, 28870 Ottersberg (DE)
(74) Vertreter: Greif, Thomas
(86) Internationale Anmeldenummer: PCT/EP2011/004603
(87) Internationale Veröffentlichungsnummer: WO 2012/034683

(56) Entgegenhaltungen:
- WO-A1-00/20952
- DE-U1-202007 012 163
- GB-A- 2 360 738
- US-A- 6 140 981
- US-A1- 2004 032 395

## Beschreibung

Die Erfindung betrifft ein Mensch-Maschine-Interface (MMI) mit einem Bedien- und Anzeigegerät (BAG) für ein Soldatenführungssystem. Im Rahmen von Soldatenführungssystemen werden alle Gruppenmitglieder mit einer C4I Fähigkeit ausgestattet, also mit Fähigkeiten zur Orientierung, Navigation und zur Kommunikation. Hierzu trägt der Soldat einen Rechner, den sogenannten Kernrechner, bei sich. Die Bedienung dieses Rechners geschieht in der Regel mit PDA oder iPod ähnlichen Eingabe- und Darstellungsgeräten. Diese erfüllen im Allgemeinen nicht die operationelle Forderung nach möglichst einfacher, robuster, feldtauglicher Eingabe und Darstellung.

Es sind Bedien- und Anzeigegeräte (BAGs) bekannt, die mit OLED-Displays kombiniert sind. Das Mensch-Maschine-Interface (MMI) zum Soldatenführungssystem orientierte sich bei den bekannten Bedien- und Anzeigegeräten an einer Windows ähnlichen Struktur mit vielen Untermenüs. Es stellte sich heraus, dass die Kombination eines Bedien- und Anzeigeräte (BAGs) mit einer relativ komplizierten Menüstruktur die vorstehend beschriebenen operationellen Forderungen nur unbefriedigend erfüllen.

Aus der DE 20 2007 012 163 U1 ist ein tragbares Bedien- und Anzeigegerät bekannt, das einen ergonomisch geformten Griff oder Gehäuse mit einem darin angebrachten Display enthält. Am Griff oder dem Gehäuse sind Bedienelemente angebracht, darunter ein Wipp- oder Schiebeschalter. Als Display wird ein Panel-Display oder ein Okular-Display eingesetzt.

Der Erfindung liegt daher die Aufgabe zu Grunde, ein Mensch-Maschine-Interface (MMI) mit einem Bedien- und Anzeigegerät als Verbindung zum Kernrechner bereitzustellen, das optimierte Elemente zur Bedienung und Darstellung aufweist.

Diese Aufgabe wird nach der Erfindung durch die Merkmale des Anspruchs 1 gelöst, insbesondere dadurch, dass die Bedienung über ein auf einem Display dargestellten Auswahlmenü erfolgt, das aus neun in 3x3-Anordnung dargestellten Auswahlfeldern besteht, und dass das Bedien- und Anzeigegerät einen 8-Wege-Schalter enthält, der in seiner Ausgangsstellung das zentrale Auswahlfeld markiert und von dem zentralen Ausgangsfeld jeweils mit nur einer Bewegung (Klick) eines der acht anderen Auswahlfelder markieren kann.

Das Bedien- und Anzeigegerät (BAG) nach der Erfindung ermöglicht es, die auf einem Kernrechner laufende C4I-Software darzustellen und zu bedienen. Durch die Implementierung eines 8-Wege-Schalters in das BAG wird ein optimales Zusammenwirken zwischen Menüstruktur und Bediengerät realisiert.

Die Bedienung ist sehr einfach, ohne dass sich der Soldat in Untermenüs verirren kann. Es ist feldtauglich für den Einsatz eines Infanteristen unter Stress. Ebenso lassen sich Funkgeräte (PTT) in Verbindung mit der erfindungsgemäßen Bedienoberfläche einfach bedienen.

Die Menüstruktur kann vorteilhaft so gestaltet werden, dass die Hauptfunktionen auf den horizontalen und vertikalen Hauptachsen so angeordnet sind, dass eine leichte Orientierung und somit Bedienung im Menü ermöglicht wird.

Bei der Kombination aus Bedienelement (8-Wege-Schalter) mit der graphischen Benutzerschnittstelle kann die Menüstruktur so gestaltet werden, dass eine quasi blinde Bedienung des MMIs möglich ist. Ebenso kann die graphische Gestaltung (Größe, Form und Farbe der Ikonen, Größe und Art der Beschriftung) so gewählt werden, dass eine Bedienung während eines mobilen Einsatzes ermöglicht wird.

Der Einbau eines Displays in das Bedien- und Anzeigegerät ist platzsparend und verhindert, dass das BAG nach außen leuchtet.

Bevorzugt wird auf einem Auswahlfeld jeweils eine Ikone dargestellt, die vorzugsweise möglichst einfach gestaltet ist. Werden die Ikonen in weißer Schrift auf schwarzem Hintergrund dargestellt, so wird ein minimaler Energieverbrauch des Displays, insbesondere des OLED-Displays, des Bedien- und Anzeigegerätes erreicht. Ebenso lässt sich durch eine kontrastreiche Gestaltung des graphischen Aufbaus eine leichte Bedienbarkeit auch bei niedriger Einstellung der Helligkeit des Displays erreichen.

Nachfolgend wird die Erfindung anhand eines vereinfacht dargestellten Ausführungsbeispiels näher erläutert.
Die Figuren 1 und 2 zeigen ein Bedien- und Anzeigegerät,
Figur 3 zeigt ein Auswahlmenü, wie es auf dem Display dargestellt wird.

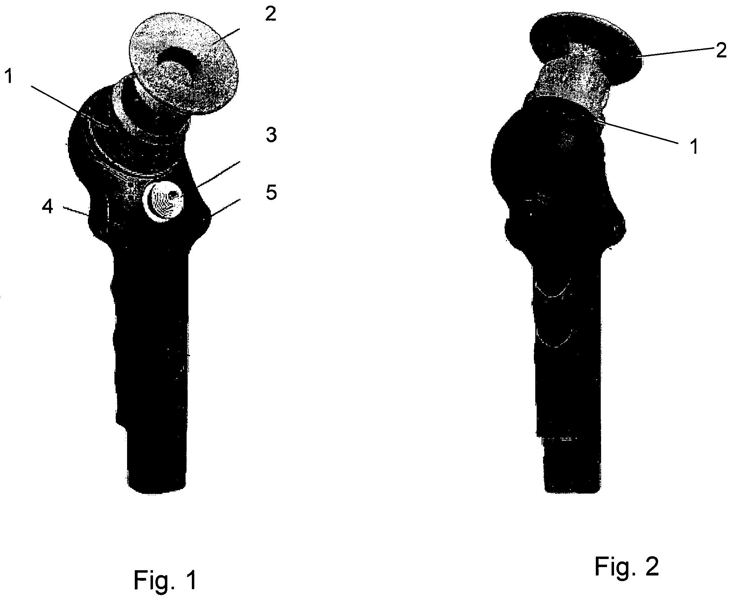

Das in den Figuren 1 und 2 dargestellte Bedien- und Anzeigegerät enthält ein eingebautes OLED-Display, dass über ein Okular 1 betrachtet werden kann. Alternativ kann als Display auch ein Helmdisplay verwendet werden. Eine Augenmuschel 2 verhindert den Eintritt von störendem Fremdlicht und den Austritt von Displaylicht beim Betrachten des Displays.

Das Gehäuse des Bedien- und Anzeigegerätes ist teilweise als ergonomisch geformter Griff gestaltet und enthält einen 8-Wege-Schalter 3, der zur Markierung eines Auswahlfeldes in acht Richtungen gekippt werden kann. Ein getrennter, als Druckschalter gestalteter Bedienknopf 4 dient zur Auswahl eines markierten Feldes. Mittels eines weiteren Druckschalters 5 kann die Auswahl eines Menüs rückgängig gemacht werden, also das vorherige Auswahlmenü wieder angezeigt werden.

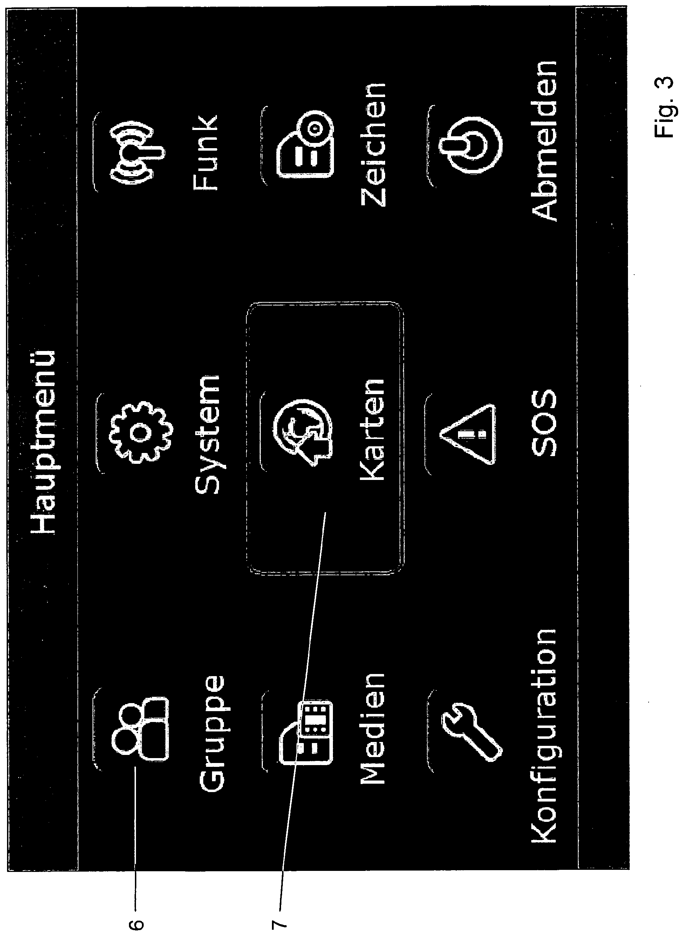

In Figur 3 ist ein auf dem Display angezeigtes Auswahlmenü dargestellt. Es besteht aus neun Auswahlfeldern 6, 7, die in einer 3x3-Anordnung dargestellt sind. Jedes Auswahlfeld 6, 7 lässt sich markieren und anschließend durch Drücken des Druckschalters 4 auswählen. In Figur 3 ist das zentrale Auswahlfeld 7 markiert, was durch einen Rahmen angezeigt wird. Die Markierung kann auch durch einen Farb- oder Helligkeitswechsel oder andere grafische Änderungen erfolgen.

Jedes Auswahlfeld 6, 7 zeigt eine möglichst einfach gestaltete Ikone in weißer Farbe auf schwarzem Hintergrund. Durch die Schwarz-Weiss-Darstellung wird ein minimaler Energieverbrauch der Anzeigeneinheit, im Beispiel ein OLED-Display, erreicht.

Bei der in Figur 3 dargestellten Markierung des zentralen Auswahlfeldes 7 befindet sich der 8-Wege-Schalter 3 in seiner Ausgangsstellung. Durch Kippen in eine der acht möglichen Richtungen wird jeweils eines der acht um das zentrale Auswahlfeld angeordneten Auswahlfelder 6 markiert. Durch die Anordnung der Felder 6, 7 in Verbindung mit dem 8-Wege-Schalter 3 lässt sich ausgehend vom zentralen Auswahlfeld 7 eines der acht anderen Auswahlfelder 6 jeweils mit nur einer Bewegung, beispielsweise einem Klick, markieren. Die Auswahl eines markierten Feldes 6, 7 und damit die Ansteuerung der mit dem Feld hinterlegten Funktion erfolgt anschließend mit dem Bedienknopf 4.

## Patentansprüche

1. Mensch-Maschine-Interface (MMI) mit einem Bedien- und Anzeigegerät (BAG) für ein Soldatenführungssystem mit
- einem Display zur Anzeige eines Auswahlmenüs, das aus neun in 3x3-Anordnung dargestellten Auswahlfeldern (6, 7) besteht, und
- einem 8-Wege-Schalter (3) am Bedien- und Anzeigegerät zur Markierung eines Auswahlfeldes (6), wobei
der 8-Wege-Schafter (3) in seiner Ausgangsstellung das zentrale Auswahlfeld (7) markiert und von dem zentralen Auswahlfeld (7) jeweils mit nur einer Bewegung (Klick) eines der acht anderen Auswahlfelder (6) markieren kann und das Bedien- und Anzeigegerät einen getrennten Bedienknopf (4) zur Auswahl eines markierten Feldes (6, 7) enthält.

2. Mensch-Maschine-Interface nach Patentanspruch 1, **dadurch gekennzeichnet, dass** in das Bedien- und Anzeigegerät ein Display, insbesondere ein OLED-Display, eingebaut ist.

3. Mensch-Maschine-Interface nach Anspruch 2, **dadurch gekennzeichnet, dass** das Bedien- und Anzeigegerät ein Okular (1) zur Betrachtung des eingebauten Displays enthält.

4. Mensch-Maschine-Interface nach Anspruch 1, **dadurch gekennzeichnet, dass** das Auswahlmenü auf einem Helmdisplay dargestellt wird.

5. Mensch-Maschine-Interface nach einem der Ansprüche 1 bis 4, **dadurch gekennzeichnet, dass** ein Auswahlfeld (6,7) eine Ikone anzeigt, die vorzugsweise möglichst einfach gestaltet ist.

6. Mensch-Maschine-Interface nach Anspruch 5, **dadurch gekennzeichnet, dass** die Ikonen weiß vor einem schwarzen Hintergrund angezeigt werden.

## Claims

1. Man-machine interface (MMI) having an operating and display device (BAG) for a military management system, having
- a display for displaying a selection menu which consists of nine selection fields (6, 7) displayed in a 3x3 arrangement, and
- an 8-way switch (3) on the operating and display device for marking a selection field (6),
the 8-way switch (3) marking the central selection field (7) in its starting position and being able to mark one of the eight other selection fields (6) from the central selection field (7) with only one movement (click) in each case, and the operating and display device containing a separate operating knob (4) for selecting a marked field (6, 7).

2. Man-machine interface according to Patent Claim 1, **characterized in that** a display, in particular an OLED display, is installed in the operating and display device.

3. Man-machine interface according to Claim 2, **characterized in that** the operating and display device contains an eyepiece (1) for viewing the installed display.

4. Man-machine interface according to Claim 1, **characterized in that** the selection menu is displayed on a helmet display.

5. Man-machine interface according to one of Claims 1 to 4, **characterized in that** a selection field (6, 7) displays an icon which is preferably as simple as possible.

6. Man-machine interface according to Claim 5, **characterized in that** the icons are displayed in white against a black background.

## Revendications

1. Interface homme-machine (MMI) comportant un appareil de commande et d'affichage (BAG) destiné à un système de guidage de soldats, comprenant
- un afficheur destiné à afficher un menu de sélection constitué de neuf champs de sélection (6, 7) représentés selon un agencement de 3x3, et
- un commutateur à 8 voies (3) sur l'appareil de commande et d'affichage, destiné à repérer un champ de sélection (6), dans lequel
le commutateur à 8 voies (3) repère le champ de sélection central (7) dans sa configuration de départ et peut repérer respectivement l'un des 8 autres champs de sélection (6) par rapport au champ de sélection central (7) en effectuant un seul mouvement (clic) et l'appareil de commande et d'affichage comporte un bouton de commande séparé (4) permettant de sélectionner un champ repéré (6, 7).

2. Interface homme-machine selon la revendication 1, **caractérisée en ce qu'**un afficheur, notamment un afficheur OLED, est intégré à l'appareil de commande et d'affichage.

3. Interface homme-machine selon la revendication 2, **caractérisée en ce que** l'appareil de commande et d'affichage comporte un oculaire (1) destiné à observer l'afficheur intégré.

4. Interface homme-machine selon la revendication 1, **caractérisée en ce que** le menu de sélection est représenté sur un afficheur de casque.

5. Interface homme-machine selon l'une quelconque des revendications 1 à 4, **caractérisée en ce qu'**un champ de sélection (6, 7) affiche une icône qui est de préférence réalisée de la manière la plus simple possible.

6. Interface homme-machine selon la revendication 5, **caractérisée en ce que** les icônes sont affichées en blanc devant un arrière-plan noir.
